# EUROPEAN PATENT APPLICATION

(11) **EP 0 791 616 A1**
(43) Date of publication of application: **27.08.1997**
(21) Application number: 97102253.8
(22) Date of filing: 12.02.1997
(51) Int. Cl.: C08G 69/10, C08G 73/10

(54) **Process for producing polysuccinimide and use of said compound**

(30) Priority: 14.02.1996 JP 26836/96
(71) Applicant: MITSUBISHI CHEMICAL CORPORATION, Chiyoda-ku, Tokyo 100 (JP)
(72) Inventor: Uenaka, Mayumi, Koshigaya-shi, Saitama (JP); Tomida, Masayuki, c/o Mitsubishi Chem. Corp., Inashiki-gun, Ibaraki (JP)
(74) Representative: Hansen, Bernd, Dr. Dipl.-Chem.

(57) **Abstract**

A process for producing polysuccinimide comprising polycondensing a monomer selected from aspartic acid, maleamic acid, a reaction product of maleic acid and ammonia, and a mixture thereof in the presence of a specific phosphorous acid compound, preferably triphenyl phosphite or tributyl phosphite. Polysuccinimide having a reduced residual monomer content and an increased molecular weight is produced efficiently. This compound can be used as a chelating agent, a scale inhibitor, a builder, a dispersant, a humectant or an additive for fertilizers.

## Description

### FILED OF THE INVENTION

This invention relates to a process for producing polysuccinimide. The polysuccinimide according to this invention is useful as a precursor of polyaspartic acid. Polysuccinimide and polyaspartic acid are useful as a chelating agent, a scale inhibitor, a builder, a dispersant, a humectant, an additive for fertilizers, etc.

### BACKGROUND OF THE INVENTION

Polysuccinimide can be produced by polymerizing aspartic acid using a large quantity of an acid catalyst, such as phosphoric acid, at 170 to 200°C in vacuo (see JP-B-48-20638 (the term "JP-B" as used herein means an "examined published Japanese patent application") and U.S. Patent 5,142,062). This process provides polysuccinimide having a high molecular weight but involves difficulty in removing the residual catalyst. Polysuccinimide can also be produced by uniformly mixing an amino acid, such as aspartic acid, and a small amount of an acid catalyst and polymerizing at 110 to 300°C (see European Patent 644,257). On the other hand, known processes using no catalyst include a process in which aspartic acid and maleinamic acid are reacted in a solid phase at a high temperature of 180°C or higher (see U.S. Patents 5,057,597 and 5,219,986, and JP-A-6-206937 (the term "JP-A" as used herein means an "unexamined published Japanese patent application")). However, the non-catalyzed process shows a low rate of polymerization, and the resulting polysuccinimide has a low molecular weight.

Additionally, the above-mentioned conventional processes have a common disadvantage that the resulting polysuccinimide has a considerable residual monomer content, which is problematical in a lowering of physical property for some uses, for example, as a chelating agent.

It has therefore been demanded to develop a novel catalyst which makes it possible to produce high-molecular weight polysuccinimide in a short time on an industrial scale.

### SUMMARY OF THE INVENTION

An object of the present invention is to provide high-molecular weight polysuccinimide efficiently.

As a result of extensive study, the inventors of the present invention have found that high-molecular weight polysuccinimide can be prepared easily in a short time by polycondensing a monomer, such as aspartic acid, in the presence of a specific phosphorous acid compound and thus reached the present invention.

The present invention consists in a process for producing polysuccinimide comprising polycondensing a monomer selected from aspartic acid, maleamic acid, a reaction product of maleic acid and ammonia, and a mixture thereof in the presence of a phosphorous acid compound represented by formula (I) or (II):

P(OR)₃ (I)

wherein R represents a halogen-substituted or unsubstituted alkyl group having 3 to 20 carbon atoms or a halogen-substituted or unsubstituted aryl group having 6 to 20 carbon atoms, or

HP(O)(OAr)₂ (II)

wherein Ar represents a halogen-substituted or unsubstituted aryl group having 6 to 20 carbon atoms.

### DETAILED DESCRIPTION OF THE INVENTION

The phosphorous acid compound which can be used in the present invention is not particularly limited as long as it is represented by the formula (I) or (II).

In formulae (I), R preferably represents an alkyl group having 4 to 12 carbon atoms which may be substituted with a halogen atom such as a chlorine atom or a bromine atom, or a phenyl group which may be substituted with a halogen atom such as a chlorine atom or a bromine atom.

Specific examples of the phosphorous acid compound are trialkyl phosphites such as tributyl phosphite, tripentyl phosphite, trihexyl phosphite and trioctyl phosphite; diaryl phosphites such as diphenyl phosphite; triaryl phosphites such as triphenyl phosphite and tri(p-chlorophenyl) phosphite; and i-decyldiphenyl phosphite. Preferred of them are triphenyl phosphite and tributyl phosphite.

The phosphorous acid compound is used in an amount of 0.001 to 500 parts by weight, preferably 0.01 to 50 parts by weight, still preferably 0.01 to 30 parts by weight, per 100 parts by weight of the monomer, such as aspartic acid.

If the amount of the phosphorous acid compound is less than 0.001 part, the phosphorous acid compound produces little effect in improving the rate of polycondensation. If the amount exceeds 500 parts, no further improvement in reaction rate results.

Any monomer providing polysuccinimide on polycondensation, such as a reaction product of ammonia and maleic acid, maleamic acid, L-, D- or DL-aspartic acid, etc., can be used in the present invention with no particular restriction. Particularly preferred of these monomers is aspartic acid for ease of obtaining a high-molecular weight polymer. Other copolymerizable monomers may be used in combination with aspartic acid in an amount not exceeding 50% based on the total monomers. The copolymerizable monomers are not particularly limited and include (1) aspartic acid salts, (2) glutamic acid and its salts, (3) amino acids, e.g., alanine, leucine and lysine, (4) hydroxycarboxylic acids, e.g., glycolic acid, lactic acid and 3-hydroxybutyric acid, and (5) compounds having at least one functional group reactive with an amino group or a carboxyl group (exclusive of the compounds (1) to (4)), such as 2-hydroxyethanol, maleic acid and aniline.

If desired, the polycondensation reaction can be carried out in the presence of a molecular weight regulator. The molecular weight regulator to be used is not particularly limited as long as it is capable of reacting with the polymer terminal during polycondensation. Primary or secondary amine compounds are preferred. It is thought that these amines react with the carboxyl group at the polymer terminal thereby to suppress the polymerization activity and thus control the molecular weight. Amines the conjugate acid of which has a dissociation constant (pKa) of 7 or lower, particularly 6 or lower, in an aqueous solution are still preferred. The pKa of the conjugate acid of amines can be found in The Chemical Society of Japan (ed.), Kagaku Binran Kisohen (the data of dissociation constants of organic compounds in an aqueous solution) or A.E. Martell and R.M. Smith, Critical Stability Constants, Vols. 1, 2, 3 and 5, Plenum Press.

Useful primary or secondary amines include morpholine, hexylamine, o-aminopyridine, m-aminopyridine, p-aminopyridine, butylamine, aniline, triethylenetetramine, 1-naphthylamine, 2-naphthylamine, o-aminophenol and 4-aminobutyric acid. Of these amines, those having a pKa of 6 or less include aniline, triethylenetetramine, 1-naphthylamine, 2-naphthylamine, o-aminophenol and 4-aminobutyric acid. These amines can be used either individually or as a mixture of two or more thereof.

The manner of addition of the amine to the polymerization system is not particularly limited. The amine can be added all at once at the start of polymerization or be added portionwise with time. The amount of the amine to be added is subject to variation depending on the kind of the amine and the desired molecular weight of the polymer. Where a low-molecular weight polymer is desired, a large quantity of the amine should be added. A generally recommended amount of the amine is not more than 100 mol%, preferably not more than 80 mol%, particularly preferably not more than 60 mol%, based on the monomer.

The reaction conditions are not particularly limited. For example, the monomer is polycondensed in the presence of the phosphorous acid compound as a catalyst according to the present invention and a reaction solvent, or the monomer and the catalyst are wet or dry blended in the absence of a reaction solvent followed by polycondensation (bulk polymerization).

Bulk polymerization, though economical because of no use of a solvent, is, in general, disadvantageous for obtaining a high-molecular weight polymer as compared with polymerization using a solvent. According to the process of the present invention, however, since polysuccinimide having a high molecular weight can be produced even though no solvent is used, the bulk polymerization is a particularly preferred system.

The reaction can be carried out under atmospheric pressure or reduced pressure, or under pressure, usually under a pressure of 10 Pa to 1 MPa.

### Bulk polymerization:

When the reaction is conducted in the absence of a reaction solvent (bulk polymerization), the state of dispersion of the catalyst is not restricted, but it is preferable that the monomer in powder form and the catalyst be previously mixed sufficiently. If polycondensation starts with the catalyst remaining insufficiently dispersed, problems tend to occur, such as partial melting and solidification of the reaction system, a reduction in molecular weight, and an increase in reaction time.

The powdered monomer and the catalyst can be mixed by wet mixing using a solvent as a diluent for the catalyst (hereinafter referred to as a diluent for distinction from the reaction solvent) or dry mixing by means of equipment. The mixing temperature is not particularly limited as long as it is not higher than 150°C, in which range polysuccinimide does not undergo polycondensation. The mixing is preferably carried out at a tempereature of from room temperature to 120°C. The mixing time is 0.01 to 600 minutes, preferably 0.01 to 300 minutes, still preferably 0.01 to 50 minutes.

In the case of wet mixing, the catalyst is mixed with the diluent, and the resulting mixture is then mixed with the powdered monomer. While not limiting, the diluent to be used is preferably selected from those capable of uniformly mixing with the catalyst used and having a boiling point of 150°C or lower in taking it into consideration that it should be evaporated after mixing. Examples of suitable diluents are aliphatic or alicyclic hydrocarbons such as hexane and cyclohexane; aromatic hydrocarbons such as benzene and toluene; esters such as ethyl acetate and butyl acetate; ketones such as acetone and methyl ethyl ketone; alcohols such as methanol, ethanol and propanol; and water. Water is particularly preferred, for water is by-produced in the subsequent reaction and does not need any complicated process for recovery.

The diluent for the catalyst is used in an amount usually of from 0.1 to 30 parts by weight, preferably from 0.5 to 25 parts by weight, per 100 parts by weight of the monomer. If the amount of the diluent is less than 0.1 part, the effect in improving the rate of polycondensation is insubstantial. If it exceeds 30 parts, it takes time for the diluent to be removed by evaporation.

In the case of dry mixing, the catalyst is added to the monomer, followed by mixing by means of a mixing apparatus. The catalyst may be added either all at once or in small portions. Common mixers, blenders and kneaders can be prefereably used for dry mixing. Examples of large-sized stirring and kneading type mixing apparatus include a single- or twin-screw extruder, a high-viscosity reactor, SV-Mixer and Conical Drier (both manufactured by Shinko Pantec), MZ-Processor (manufactured by Ohkawara Seisakusho), Paddle Drier (manufactured by Nara Kikai), SC-Processor, and Pressure Kneader (both manufactured by Kurimoto Tekkosho).

The polycondensation in the absence of a reaction solvent can be carried out by charging the thus prepared dry or wet mixture in a reactor and allowing the mixture to react in a solid phase by heating at 100 to 400°C, preferably 150 to 350°C, for an average retention time of 0.01 to 240 minutes, preferably 0.01 to 180 minutes, still preferably 0.01 to 100 minutes, while stirring or kneading. If the reaction temperature is lower than 100°C, or if the average retention time is shorter than 0.01 minute, there is a possibility that the reaction does not complete. If the temperature is higher than 400°C, or if the average retention time is longer than 240 minutes, decomposition reaction tends to occur, or the reaction efficiency tends to be reduced.

Reactors which satisfy the above-mentioned reaction conditions may be either of batch system or of continuous system. Useful batch type reactors include Plough Share Mixer (manufactured by Taiheiyo Kiko), Polyphase System (manufactured by Littleford Day), SV-Mixer, MZ-Processor, and batch type kneaders. Useful continuous type reactors include a single- or twin-screw extruder, Paddle Drier, LCR (manufactured by Lurgi), SC-Processor, KRC Kneader (manufactured by Kurimoto Tekkosho), Bivolak (manufactured by Sumitomo Heavy Industries, Ltd.), and N-SCR (manufactured by Mitsuibishi Heavy Industries, Ltd.).

The polymerization reaction in the absence of a reaction solvent is preferably performed in an inert gas stream. While not limiting, the inert gas such as nitrogen or argon is preferably used.

### Polycondensation in the presence of a reaction solvent:

Where the reaction is carried out in the presence of a reaction solvent, the solvent to be used preferably includes aromatic hydrocarbons, halogenated hydrocarbons, ethers, and esters. Those having a boiling point of 100°C or higher, particularly 130°C or higher, are still preferred. These solvents may be used either individually or as a mixture of two or more thereof. Specific examples of useful solvents are aromatic hydrocarbons such as toluene, xylene, diethylbenzene, amylbenzene, cumene, mesitylene and tetraline; halogenated hydrocarbons such as mono- or dichlorotoluene and isomers thereof (inclusive of isomeric mixtures), 1,4-dichlorobutane, chlorobenzene and dichloroethyl ether; ethers such as butyl ether, diisoamyl ether and anisole; esters such as n-amyl acetate, isoamyl acetate, methylisoamyl acetate, methoxybutyl acetate, cyclohexyl acetate, benzyl acetate, n-butyl propionate, isoamyl propionate, isoamyl butyrate and n-butyl butyrate; and aprotic polar solvents such as N,N-dimethylformamide, N,N-dimethylacetamide, N-methylpyrrolidone, 1,3-dimethyl-2-imidazolidinone, tetramethyluric acid, dimethyl sulfoxide, sulfolane and hexamethylphosphoramide. Preferred of them are diethylbenzene, cumene, chlorotoluene, 1,4-dichlorobutane, mesitylene, diisoamyl ether, n-butyl butyrate, 1,3-dimethyl-2-imidazolidinone, and sulfolane for their boiling point. Still preferred are cumene, chlorotoluene, mesitylene, 1,3-dimethyl-2-imidazolidinone, and sulfolane.

The solvent is used in an amount of 1 to 5000 parts by weight, preferably 5 to 2000 parts by weight, per 100 parts by weight of the monomer.

The polycondensation reaction in the presence of a solvent is conducted with stirring at a temperature of 100 to 350°C, preferably 130 to 300°C, for a period of 1 minute to 100 hours, preferably 10 minutes to 50 hours, still preferably 15 minutes to 20 hours. If the reaction temperature is lower than 100°C, the reaction hardly proceeds. The reaction, if conducted at temperatures exceeding 350°C, tends to be accompanied by decomposition reaction or tends to have poor thermal efficiency. The time when water is no more produced in the reaction system is taken as a substantial end point of the reaction.

The thus produced polymer is post-treated in a manner selected appropriately according to the end use. For example, the solvent used is removed by centrifugation, and the resulting polymer is washed with water or a low-boiling solvent in an ordinary method.

The process according to the present invention, in which a specific phosphorous acid compound is used as a catalyst, provides polysuccinimide having a reduced residual monomer content and an increased molecular weight as compared with the conventional processes using phosphoric acid, phosphorous acid, etc. Therefore, with the molecular weight of the resulting polymers being equal, the process of the invention makes it possible to reduce the polymerization time or the requisite amount of the catalyst, thus offering great advantages in industrial production of polysuccinimide.

The present invention is especially advantageous in the field where polysuccinimide or polyaspartic acid derived therefrom is used as a thickener or a base polymer to be crosslinked, in which field an increase in molecular weight leads to an increase of effect, or where the polymer is required to have high dispersibility as in use as a builder.

Additionally, the polysuccinimide as obtained by the process of the present invention exhibits satisfactory quality even if it is not purified, which is of great advantage in industry.

The present invention will now be illustrated in greater detail with reference to Examples, but it should be understood that the invention is not deemed to be limited thereto.

The molecular weight of the polysuccinimides obtained in Examples 1 to 5 and Comparative Examples 1 to 4 are polystyrene conversion values obtained by gel-permeation chromatography (GPC) using two "MIXE-C columns each packed with 5 µm of PLgel" produced by Polymer Labo., a 10 mM solution of lithium bromide in N,N-dimethylformamide as an eluent, and a differential refractometer.

The molecular weight of the polysuccinimides obtained in Examples 6 to 8 and Comparative Examples 5 and 6 are polystyrene conversion values obtained by GPC using a "GMHHR-M column packed with TSKgel" and a "G2000HHR column packed with TSKgel" both manufactured by Tosoh Corp., a 10 mM solution of lithium bromide in dimethylformamide as an eluent, and a differential refractometer.

The conversion and the rate of monomer retention were measured by liquid chromatography using two "MIX ED-C columns each packed with 5 µm of TLGEL" manufactured by Polymer Lab. and a 20 mM solution of lithium bromide in N,N-dimethylformamide as an eluent.

### EXAMPLE 1

Fifty grams of L-aspartic acid was charged in a 200 ml separable flask equipped with a condenser, a thermometer, and a stirrer, and a solution of 5 g of tributyl phosphite in 20 g of acetone was added thereto. The flask was heated on a mantle heater set at 165°C in a nitrogen atmosphere to evaporate acetone only. The heater was then set at 235°C to commence polycondensation. After production of water was observed, the system was stirred for 3 hours to obtain pale yellow polysuccinimide. The weight average molecular weight of the resulting polysuccinimide was 20,000.

### EXAMPLES 2 TO 5 AND COMPARATIVE EXAMPLES 1 TO 4

The same procedure as in Example 1 was repeated except for replacing tributyl phosphite with phosphoric acid or a phosphorous acid compound as shown in Table 1 below. The results obtained are also shown in Table 1.

**TABLE 1**

| Example No. | Catalyst | Weight Average Molecular Weight | Conversion (%) | Rate of Monomer Retension (%) |
|---|---|---|---|---|
| Compara. Example 1 | phosphoric acid | 17000 | 99.8 | 0.2 |
| Compara. Example 2 | phosphorous acid | 18000 | 99.7 | 0.3 |
| Compara. Example 3 | trimethyl phosphite | 19000 | 60.5 | 39.5 |
| Compara. Example 4 | triethyl phosphite | 19000 | 94.7 | 5.3 |
| Example 1 | tributyl phosphite | 20000 | 99.8 | 0.2 |
| Example 2 | diphenyl phosphite | 24000 | 99.8 | 0.2 |
| Example 3 | triphenyl phosphite | 24000 | 99.8 | 0.2 |
| Example 4 | p-chlorotriphenyl phosphite | 26000 | 99.7 | 0.3 |
| Example 5 | i-decyldiphenyl phosphite | 22000 | 99.8 | 0.2 |

### EXAMPLE 6

In a 200 ml four-necked flask equipped with a stirrer, a water separator, a condenser, and a thermometer were charged 25 g of L-aspartic acid, 5 g of triphenyl phosphite and, as a reaction solvent, 56 g of mesitylene and 24 g of sulfolane. The mixture was heated on an oil bath set at 190°C in a nitrogen stream to start polycondensation. After the reaction mixture began to reflux, the system was stirred for 4 hours while removing by-produced water. After completion of the reaction, the reaction product was washed with methanol and then with water, and dried under reduced pressure to give 18.0 g of polysuccinimide having a weight average molecular weight of 75,000.

### EXAMPLE 7

The same procedure as in Example 6 was repeated except for using 80 g of sulfolane as a reaction solvent to obtain 18.0 g of pale yellow polysuccinimide having a weight average molecular weight of 30,000.

### EXAMPLE 8

The same procedure as in Example 6 was repeated except for replacing triphenyl phosphite with diphenyl phosphite to obtain 18.2 g of pale yellow polysuccinimide having a weight average molecular weight of 65,000.

### COMPARATIVE EXAMPLE 5

The same procedure as in Example 6 was repeated except for replacing triphenyl phosphite with phosphoric acid to obtain 18.5 g of pale yellow polysuccinimide having a weight average molecular weight of 60,000.

### COMPARATIVE EXAMPLE 6

The same procedure as in Example 7 was repeated except for replacing triphenyl phosphite with phosphoric acid to obtain 18.5 g of pale yellow polysuccinimide having a weight average molecular weight of 25,000.

While the invention has been described in detail and with reference to specific examples thereof, it will be apparent to one skilled in the art that various changes and modifications can be made therein without departing from the spirit and scope thereof.

## Claims

1. A process for producing polysuccinimide comprising polycondensing a monomer selected from aspartic acid, maleamic acid, a reaction product of maleic acid and ammonia, and a mixture thereof in the presence of a phosphorous acid compound represented by formula (I) or (II):
P(OR)₃ (I)
wherein R represents a halogen-substituted or unsubstituted alkyl group having 3 to 20 carbon atoms or a halogen-substituted or unsubstituted aryl group having 6 to 20 carbon atoms, or
HP(O)(OAr)₂ (II)
wherein Ar represents a halogen-substituted or unsubstituted aryl group having 6 to 20 carbon atoms.

2. A process according to claim 1, wherein said phosphorous acid compound is present in an amount of 0.001 to 500 parts by weight per 100 parts by weight of said monomer.

3. A process according to claim 1 or 2, wherein said polycondensation reaction is a bulk polymerization.

4. A process according to any one of the claims 1 to 3, wherein said phosphorous acid compound is triphenyl phosphite or tributyl phosphite.

5. Use of polysuccinimide obtainable according to any one of the claims 1 to 4 as a chelating agent, a scale inhibitor, a builder, a dispersant, a humectant or an additive for fertilizers.
